Europäisches Patentamt

European Patent Office

Office européen des brevets

(11) Publication number: 0 463 648 A2

# EUROPEAN PATENT APPLICATION

(21) Application number: 91200276.3

(51) Int. Cl.5: **G01N 1/30, G01N 35/00**

(22) Date of filing: 08.02.91

(30) Priority: 29.06.90 US 547167

(43) Date of publication of application:
02.01.92 Bulletin 92/01

(84) Designated Contracting States:
**BE DE FR IT NL**

(71) Applicant: **Pomeroy, Patrick Collin**
**1920 Gilly Lane**
**Concord Ca. 94518(US)**

Applicant: **Madsen, Randall David**
**11480 Hadar Drive**
**San Diego Ca. 94518(US)**

Applicant: **Chan, Wai Pan**
**415 Dimm Street**
**Richmond Ca. 94605(US)**

Applicant: **Lemke, Gary Lee**
**1630 St. David Drive**
**Danville Ca. 94526(US)**

(72) Inventor: **Pomeroy, Patrick Collin**
**1920 Gilly Lane**
**Concord Ca. 94518(US)**
Inventor: **Madsen, Randall David**
**11480 Hadar Drive**
**San Diego Ca. 94518(US)**
Inventor: **Chan, Wai Pan**
**415 Dimm Street**
**Richmond Ca. 94605(US)**
Inventor: **Lemke, Gary Lee**
**1630 St. David Drive**
**Danville Ca. 94526(US)**

(74) Representative: **Lips, Hendrik Jan George, Ir.**
**et al**
**HAAGSCH OCTROOIBUREAU Breitnerlaan**
**146**
**NL-2596 HG Den Haag(NL)**

(54) **Development of post-transferred material on solid supports: method and apparatus.**

(57) A method and apparatus is disclosed to deliver a pre-determined amount of reagents to a site that contains either membranes, gels or biological tissues for final development of the transferred antigens. The apparatus is comprised of a plurality of modules, each participating as an integral unit to the overall function and performance of the invention. A unit acting as the central controller is a module containing an assembly of valves operated with the use of a computer control system. The general operation consists of a constant supply of air imposing an external pressure upon the prefilled reagent pouches held in containment. When the valves are signalled to open, thus the supplied pressure will force the reagents into a reaction chamber whereby a membrane, gel or biological tissue is treated.

BACKGROUND OF THE INVENTION

1. Field of the Invention

The present invention relates generally to post transferred developmental assay type methods, more particularly to developmental assay of a solid support membrane or gel or biological tissue slide.

2. Description of the Background Art

A process to apply and remove reagents to identify binding fragments of various molecular structure from liquid or a transfer membrane, gel or biological tissue sample. Thus utilizing a container to insert said liquid, membrane, gel or biological tissue with applied reagents may generally be classified in the following categories: immunologically specific diagnostic reagents or immunologically non-specific reagents or chemical reagents. Accordingly, either process may require physical manipulation of required reagents. Sometimes radioactive or carcinogenic reagents are used at recipient sites in order to carry out specific or non-specific analysis of said developing membrane, gel or biological tissue. Without using radioactive or carcinogenic reagents may result in limited experimental analysis of said membrane, gel or biological tissue. As a possible result, it would cause problems of interpretation when non-specific reagents are used.

A significant number of assays have been developed and they are closely related to the limited category just described. For example, U.S. Patent Numbers 4,839,297; 4,818,677; 4,786,597; 4,632,901; 4,522,923; 4,427,415, and 4,366,241, each describes an assay method that produces a specific developmental process of varying immunoassays. Each employing a variety of apparatus that utilizes a reagent or chemical reaction chamber (housing) where said detection or developmental processes transpire. Liquid samples are applied into a reaction chamber whereby a biological transformation occurs utilizing capillary action as the determining force. Through capillary reaction a donor liquid or sample is applied. Utilizing a means to house an absorbent material or solid phase recipient matrix as a binding site for the immunoassay development, capillary reactions will carry biological samples and position such samples for immunological detection and its analysis.

Methods for ingressing and egressing liquid or reagents into an apparatus facilitating the development of an analyte for conventional signal detection may be required. The ingressing and egressing means will provide an avenue for a biological sample to flow or be introduced to a particular reagent chemical. A significant number of methods and apparatus have been developed related within the limited category just described hereabove. For example, U.S. Patent Numbers 4,837,161; and 4,629,686 each employ methods for delivering a controlled volume of chemical reagent into singular or multiple vessels whereby a specific biological reaction occurs.

For the most part, methods employing the ingress of chemicals into designed vessels, which contain a variety of compounds such as absorbing materiels or solid phase supports, are important to study the effective results of experiments of interest particularly drugs, in preclinical or clinical trials or diagnosis of antigenicity. Whereby qualitative and quantitative results enhanced the nature of assay interpretation help determine and detect specificity of immunological molecules and levels of purity before and after biological reactions.

In developing a post assay process, there are many considerations. One consideration is to provide a means to ingress reagent volumes with accurate volumetric controls that maintain and log reagent delivery so as to control undue background signals. Another consideration is to minimize reagent delivery to provide a means to sustain precious reagent volumes during long term membrane, gel or biological tissue developing. A further consideration is to reduce the potential safety hazzards relevant to the manipulation of chemicals during an assay reaction by providing a means to transfer reagent chemicals through process lines directly connected to a reaction vessel.

It would therefore be desirable to provide methods to process membrane, gel or biological tissue assays having improved delivery and recovery of reagent chemicals present in a detection of immunological reactive sample, such as proteins, and of non-immunological sample, suach as deoxyribonucleic acid (DNA). It would be particularly desirable if such method improved the convenience, safety, reproducibilty, recoverability of precious reagents at an economic cost with performance better than the previous membrane assays and employ a more specific method and apparatus to perform such functions.

SUMMARY OF INVENTION

The present invention provides a method whereby utilizing microchip computer technology to safely automate precise developmental process of membrane, gel or biological tissue which may contain protein or DNA within the structures of a solid support matrix.

In the present invention, a functioning microchip computer will command solid state controllers to activate flow control valves. Each valve and subsequent flow line dedicated to a specific reagent chemical will direct a specific reagent into a reaction chamber housing a membrane, gel or biological tissue. A process to develop a membrane, gel or biological tissue by means of introducing a required sequence and protocol of reagents will develop and detect a pattern, nature or specific quality of substances.

Thus, in one aspect, the invention involves the use of positive pressure to independently ingress various volumes of chemical reagents into a reaction chamber containing either a membrane, gel or biological tissue. Through a computer digital program, user can create a required atmosphere within the confines of a reaction chamber, and allows agitation of the said reaction chamber while housing membrane, gel or biological tissue, then egress the reagent volume channeling reagent into a reclamation system for storage or alternate site for proper waste disposal.

Thus, another aspect, the invention comprises placing a membrane, gel or biological tissue slide into a reaction chamber. Thereby, through the inventions computer, call upon or edit pre-established programs of developmental protocols. The desired program specific to the nature of the experiment is called upon and thus activates invention to start.

Further, the invention comprises an integrated reagent storage system that houses prefilled pouches which act as the reagent reservoir. Thereby, the reagent-filled pouches are connected to the process lines leading directly to a reaction chamber. A small amount of air pressure generated from an internal air pump located within the inventions chasis, supplies an integrated reagent storage system with adequate pressures to displace reagent-filled pouches. As a result the reagent chemicals are delivered to ingress a reaction chamber.

Further, the invention employs within the design of a reaction chamber a number of independent entry ports thereby maintaining integrity of reagent chemicals and preventing cross contamination of each and seperately ingressed reagents. Such contamination could lead to poor development of membrane, gel or biological tissue slide during developmental stages.

Further, after a introduction of a specific reagent chemical, a membrane, gel or biological tissue is exposed to the reagent in the order of discerned protocols, the present reagent is egressed and channeled to a manifold and subsequently diverted into a reagent storage system whereby the used reagent chemical is held for reclamation or for proper disposal. This method is particularly useful in retaining expensive reagent, such as DNA probes, which thereby maybe used again for additional probing on similar matrices.

A still further objective of the present invention, is to provide a reaction chamber and reagent-filled pouches which can be easily removed for incubation, cleaning or long term storage at alternate sites of membrane, gel or biological tissue.

An invention as hereby provided, used for developmental purposes provides hands off operation with minimal labor requirements. No manual changing of potentially hazardous reagent chemicals, nor physical manipulation of a membrane, gel or biological tissue is required. Such system exhibits a full integrated state of the art assay type developer.

BRIEF DESCRIPTION OF THE DRAWING

In order that the invention may be more fully understood it will now be described by way of example with reference to the accompanying drawings, wherein:

FIG.1 is a pictorial representation in accordance to the priciples of the present invention, with it's cover open to disclose the critical elements within the invention;

FIG.2 is a two dimension pictorial representing the underlying theorem of the present invention, with the role and relationship of specific functions;

FIG.3 is a two dimension front representation in accordance to the principles of the present invention, with its description of approximate location of reagent storage system and reaction chamber and digital computer;

FIG.4 is a two dimensional representation in accordance to the principles of the present invention, with its description of approximate front to back location of reagent storage system and reaction chamber and digital computer;

FIG.5 is a isographic representation in accordance to the principles of the present invention, with its description of a cut away view of a reaction chamber assembly to show the relationship of component locality;

FIG.6 is a isographic representation in accordance to the principles of the present invention, with its description of a cut away view of a reagent storage system assembly showing the relationship of component locality;

FIG.7 is a two dimensional representation in accordance to the principles of the invention, in which a description indicates a cut away view showing the elements comprising a reagent reclamation system.

DESCRIPTION OF PREFERRED EMBODIMENT

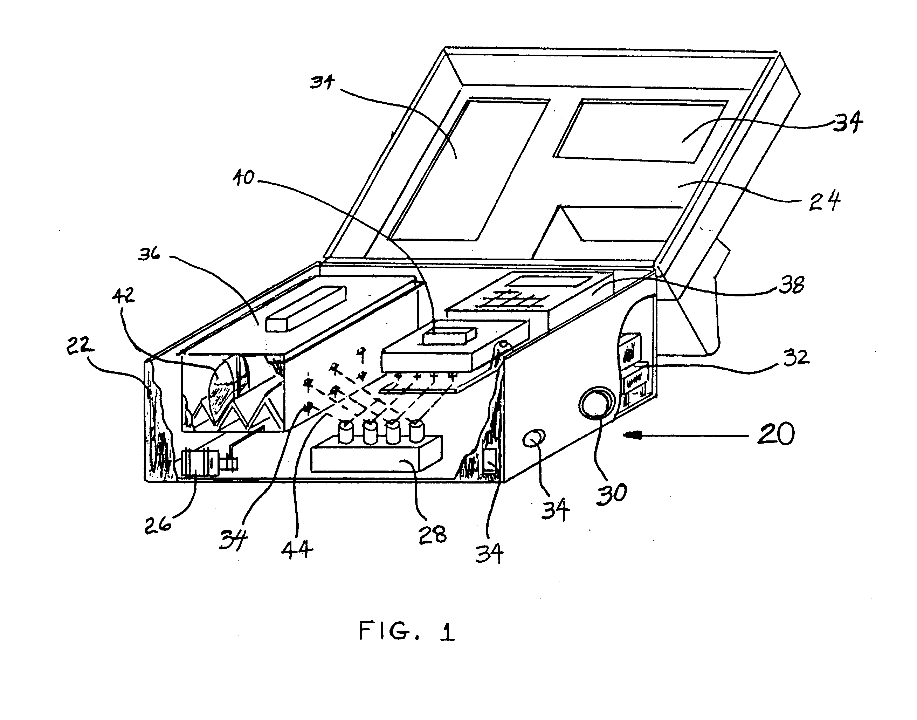

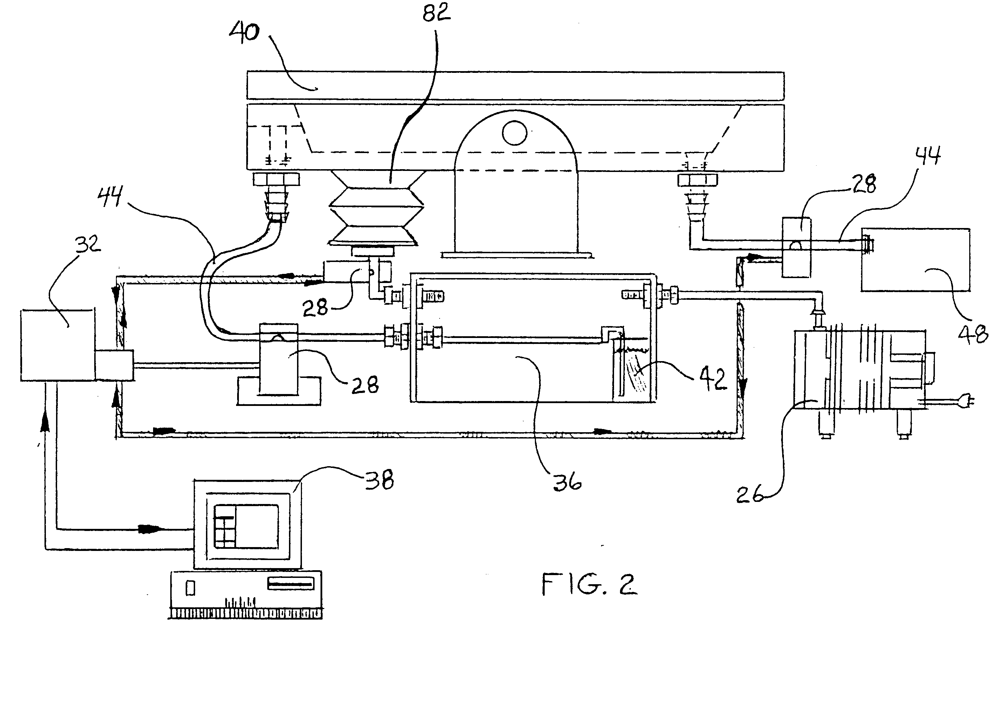

Now referring to figures, and in particular to figure 1, the invention housing and main frame 20 has a hollow housing bottom 22 is electrically grounded, which in the preferred embodiment is rectangularly shaped. The housing 22 has a cover 24 attached thereto in a coventional manner, The cover 24 fits tightly on the housing 22 preventing any exposure of electrical, mechanical elements 26, 28, 30, 32 from accidental touching therein. Preferably, the housing 22 and cover 24 are formed as one integral piece from thermoplastic, preferably the materials to be used may be polypropylene, polyethylene. A prefered housing 22 and cover 24 may reach a height of 30 centimeters by 60 centimeters in width and 40 centimeters in length and built with a multitude of apertures 34 in various localities on housing 22, cover 24, reagent storage system 36, to accomodate electrical mechanical elements 26, 28, 30,32. Preferably still, the cover 24 is provided with a raised angular section therein to accompany and permit the installation of a on board digital computer 38 attached thereon.

A module 40 described herein as a reaction chamber 40 with a preferred embodiment of a rectagular shape will function as the site where a membrane, gel or biological tissue will be contained for developmental process. Said reaction chamber 40 is positioned therethrough an aperture 34 in disclosed housing 24. Whereby the preferred embodiment may consist of the reaction chamber 40 protruding above an aperture 34 in cover 24 so as to allow easy access to said reaction chamber 40.

A module 36 described herein as a reagent storage system with a preferred embodiment of a rectangular shape will contain the pouches of prefilled reagents 42. With a preferred embodiment that allows the reagent storage system to be sealed closed so as to allow the containment and pressurization of air within the reagent storage system 36. An air pump 26 may be positioned to supply reagent storage system with adequate positive pressure in pounds of air per square inch of force (psi).

A module 38 herein described as a digital computer 38 may be positioned within the housing 22 or fastened to cover 24. With a preferred embodiment, securing said digital computer 38 to the angular pitch of the cover 24 designed to position said digital computer 38 at an angle so as to allow simple access and use.

A module 28 herein described as a pinch valve assembly 28 will act as the control gate that responds to the digital computer 38 signals and allows flow of reagents from prefilled reagent pouches 42 to a reaction chamber 40 thereto. With a preferred embodiment the pinch valve assembly 28 may position a series of valves so as to appropriate the flow of reagents without undue loss of reagent chemicals within chemical transporting line 44 attached thereto. Further, a preferred embodiment may position pinch valve assembly 28 between a reagent storage system 36 and a reaction chamber 40 so as to facilitate a short travel distance to allow rapid transfer of reagents.

A module 32 herein described as a digital input/output board 32 may be position within a housing 22 so as to facilitate the electronic switching control of a pinch valve assembly 28. With a preferred embodiment, digital input/output board 32 may comprise of solid state controls which plug into solder joints to complete interconnections of the pinch valve assembly 28 and the digital computor 38 therein.

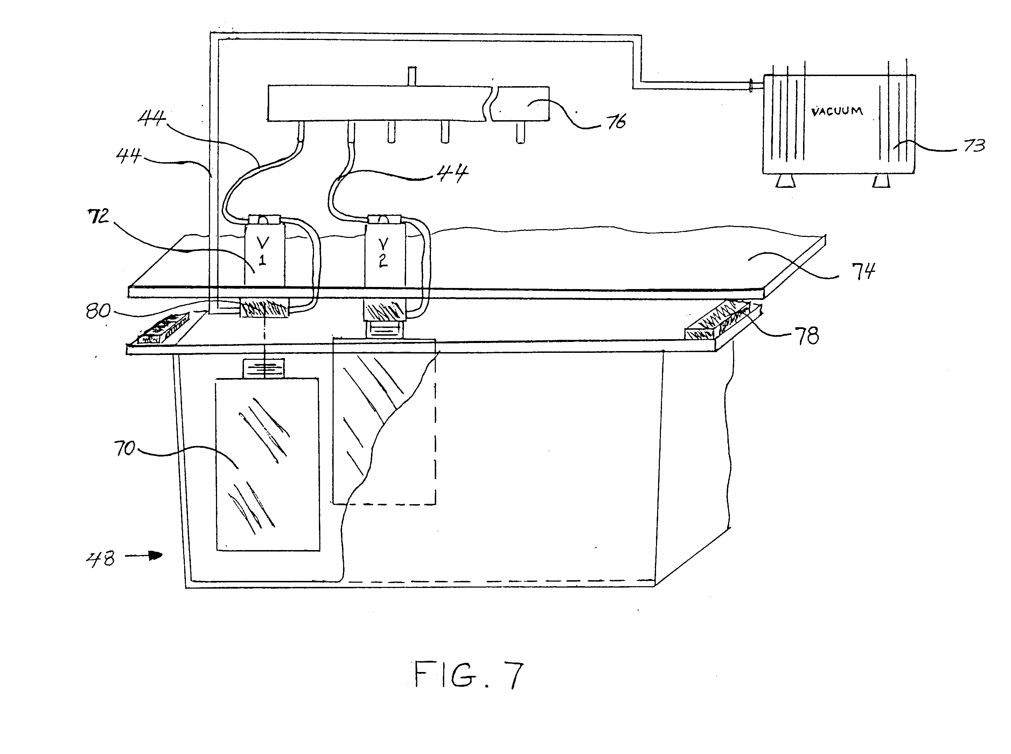

Referring now to figure 2, the invention theorem herein discloses a flow diagram indicating relationship and association of modules and integrated parts 26, 28, 32, 38, 40, 42, 44, and a reagent reclamation system 48 reference to figure 7 describe herein. With the preferred embodiment the digital computer 38 will activiate input/output board 32 and signal a pinch valve assembly 28 to open or close said pinch valve assembly 28. Further, an air pump 26 will when activiated with alternating current or direct current may supply reagent storage system 36 with sufficient air supply as to exert external pressure upon a prefilled reagent pouch 42 to permit the transmittal activity thus transfering reagent chemical,therefrom prefilled reagent pouch 42 therethrough transporting line 44 to a reaction chamber 40 thereto. Further, the preferred embodiment of reaction chamber 40 will contain a membrane, gel or biological tissue therein for developmental process. Further, ensuing a reagent contained therein a reaction chamber 40 that promotes the development of said membrane, gel or biological tissue will egress reaction chamber 40 when signal received by pinch valve assembly 28 has been activated by digital computer 38 and subsequent input/output board 32. The said reagent will flow from reaction chamber 40 therethrough transport line 44 to a reagent reclamation system 48 according to the principles of the invention disclosed further in figure 7 herein.

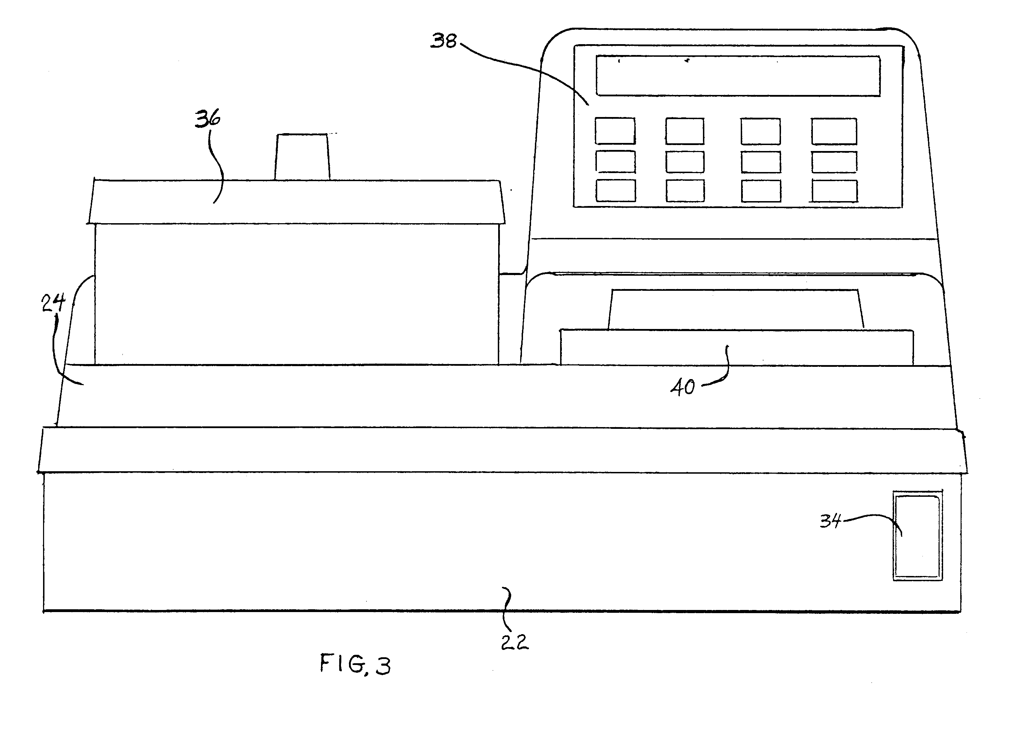

Now referring to FIGURE 3, the present invention has a preferred embodiment that allows unobstructed access to a reaction chamber 40, digital computer 38, and reagent storage system 36.

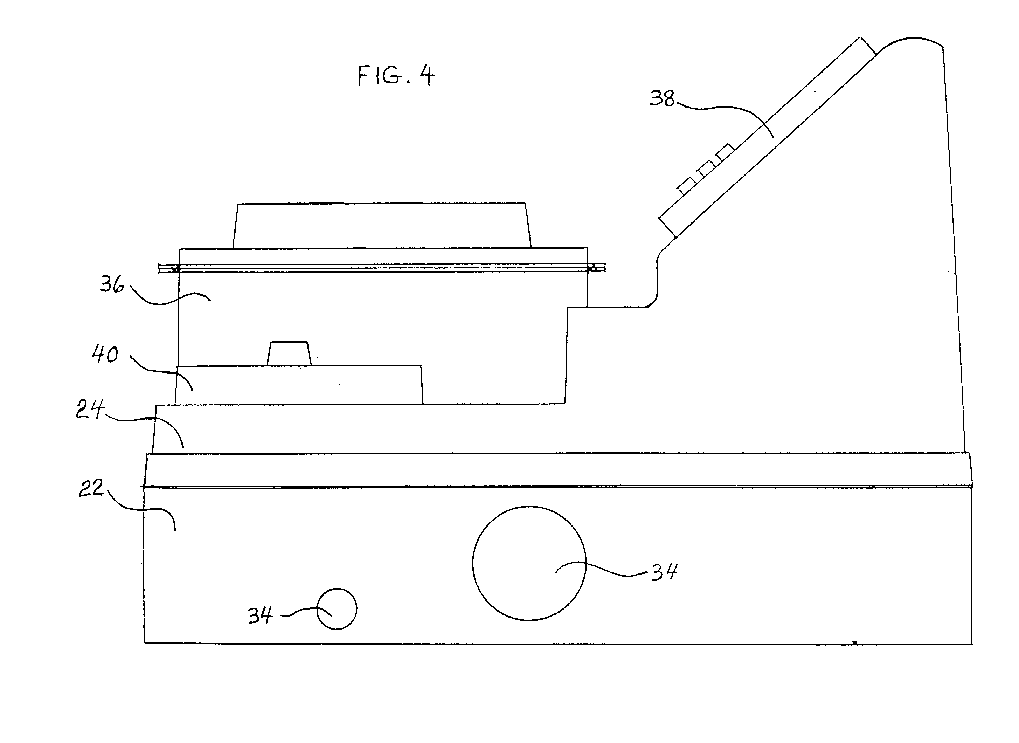

Now referring to FIGURE 4, the preferred embodiment decribes a profile arrangement of the present invention housing 22, cover 24, reaction chamber 40, reagent storage system 36, digital computer 38 and apertures 34 so as to appropriate interconnections of electrical components and a reagent reclamation system 48 reference to figure 7 herein.

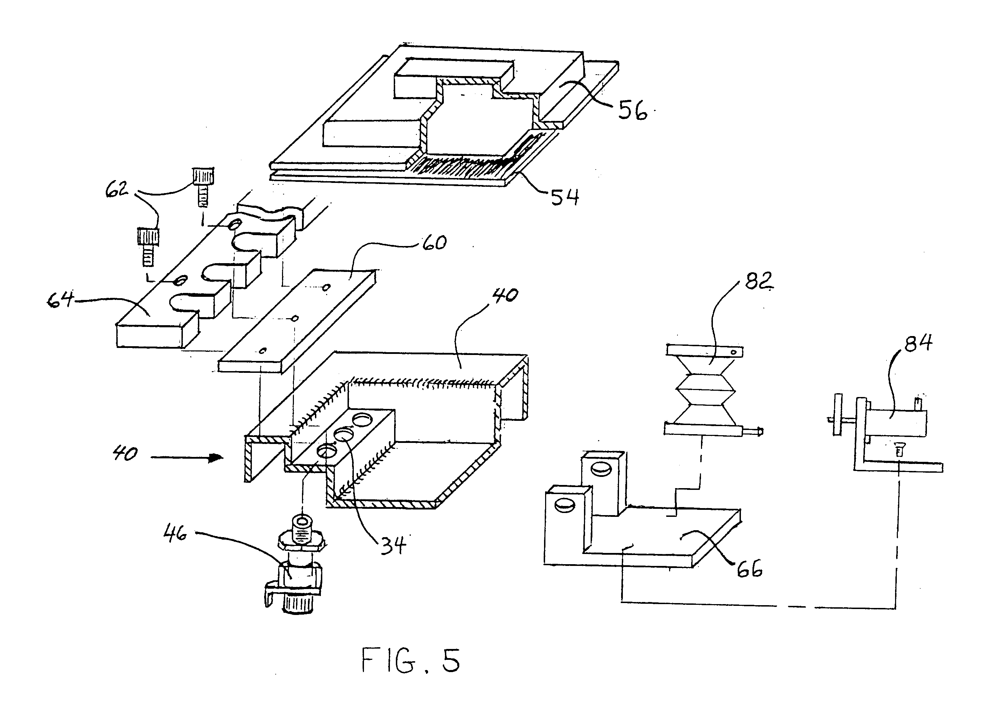

Now referring to FIGURE 5, the present invention prefers a embodiment of a reaction chamber 40 to accommodate a variety of membrane, gels or biological tissue sizes. Further, the preferred embodiment may allow a reaction chamber to be constructed of a thermoplastic material more particularly polypropylene. The said reaction chamber 40 may include a series of apertures 34 so as to allow for the fastening of a disconnect plug 46. Included as a preferred embodiment herein is a gasket 54 thus creating an air tight seal when a reaction chamber lid 56 is secured to said reaction chamber 40 thereto.

Additionally, the present invention prefers an embodiment of a reaction chamber finger clamp 64 in which said finger clamp 64 when secured by fastner 62 will clamp woppie gasketed valve 60 in such a manner as to create a unidirectional valve located on a reaction chamber 40. Further, a reaction chamber 40 is positioned in place utilizing a reaction chamber bracket 66 within the present inventions housing 22 reference to figure 1. Further, the reaction chamber 40 may be agitated by means of a air bladder 82 and motor 84.

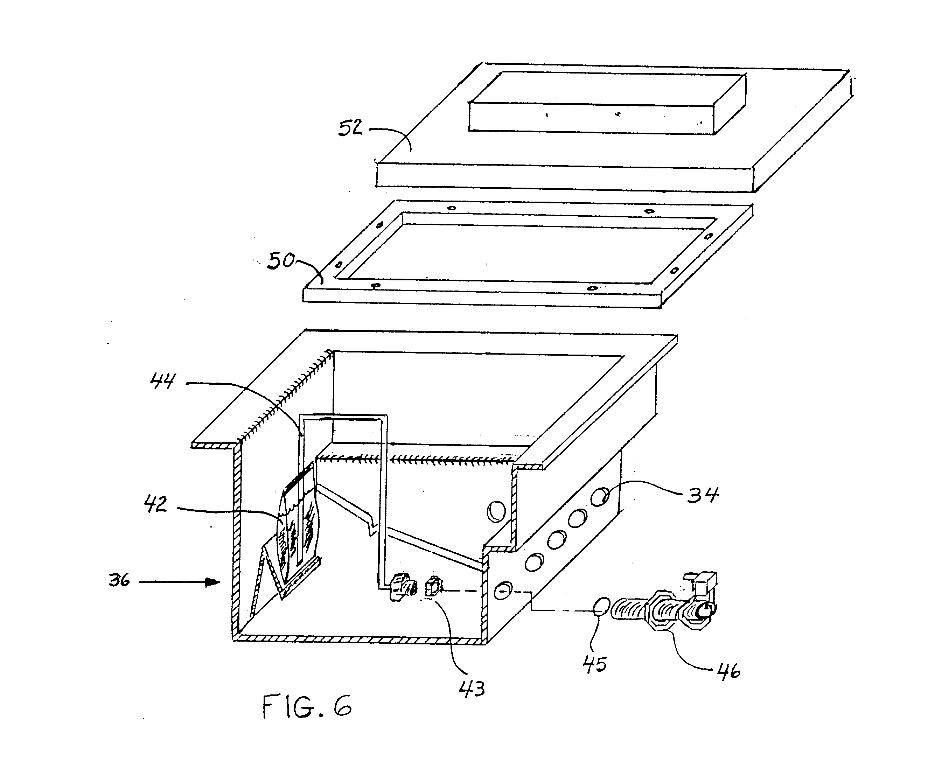

Now referring to FIGURE 6, the preferred embodiment describes a sectional isographic view of a reagent storage system 36. Further, the present invention provides that a reagent storage system 36 may be provided with a series of apertures 34 to accommodate the interconnection of a disconnect plug 46 and secure tightly to the reagent storage system 36 lining, thus fastening said plug to lining with a nut fastner 43 and seal 45. Further, the preferred embodiment may include a general location positioning the prefilled reagent pouch 42 in such a manner as to facilitate accurate flow of a chemical reagent. Further, a gasket 50 assigned to a position that creates a air tight seal when compressed with a reaction chamber lid 52.

Now referring to FIGURE 7, the present invention describes a module 48 herein described as a reagent reclamation system 48 with a preferred embodiment of a retangualr shape. Constructed from a thermoplastic materiel more particularly polyethylene. The said reagent reclamation system 48 operates utilizing a digital computer 38 reference to figure 1, controls a series of valves more particularly pinch valves 72 positioned thereon a reagent reclamation lid 74. Further, a reagent transport line 44 interconnected from a vacuum cap 80 and a waste manifold 76 may facilitate the transfer of reagents from a reaction chamber 40 reference to figure 1 to a waste collector 70. The said waste collector 70 is secured to a vacuum cap 80. Further, the preferred embodiment functions from a vacuum environment created from a vacuum pump 73 attached thereto. The said reagent reclamation system may collect various reagents into selective waste collectors 70 that are egressed from a reaction chamber 40 reference to figure 1. Further, the said reagent reclamation system 48 may have an essential vacuum gasket 78 sealing the said reagent reclamation system under operating conditions.

The invention will be further described in the following illustrative example with reference to the drawings, example offered by way of illustration is not by way of limitation. The use of this invention entails a scope of activities involving post developmental processes that can only be definded by end users and their specific research needs.

EXAMPLE

Into a reaction chamber were combined three sheets of membrane (polyvinyldifluorourathane) seperated by a polypropylene mesh in order to prevent intersheet connection. Each sheet has suspended 17 Kilo-Dalton (KD) protein within its matrix, by a preceding process known as semi-dry electroblotting. The three sheets residing in the reaction chamber with a sufficient amount of electroblotting anode #1 buffer, comprising of the ingredient 0.3 Tris (hydroxymethyl)aminomethane, 20 percent methanol at a pH 10.4. The reaction chamber lid is securely fastened and the established protocol of reagents are introduced by a start command from the digital computer.

The first reagent to enter the reaction chamber is a blocking solution to block remaining active sites on the membranes. The process of maintianing the membranes in the blocking solution shall be noted as the incubation period at room temperature. The blocking incubation process will last for 30 minutes. The solution introduced is of 5 percent bovine serum albumin, 5 % serum; 5% non-fat dry milk or 1 percent ovalbumin.

The first reagent, a blocking solution now egressed from the reaction chamber into a reclamation system, the addition of a second reagent: distilled water which enters the reaction chamber to rinse away the blocking solution. This process occurs three times for two minutes each. Once final rinse egresses the reaction chamber the addition of the first binding antibody enters the reagent chamber agitation of the reaction chamber can begin. The binding reagent comprises the solution of purified anti-Rabbit anti-serum: 10 micrograms per milliliter; serum: 1 to 1000 dilution; mouse monoclonal cell antibody containing ascites fluid: 1 to 1000 dilution; mouse monoclonal culture supernatant: 1 to a 100 dilution. The binding antibody solution exits the reaction chamber into a reagent reclamation system

The introductory of 500 mililiters of wash solution enters the reaction chamber, then for ten minutes reaction chamber is agitated. The wash solution is egressed and another 500 mililiters of wash enters the reaction chamber to begin the secondary wash cycle. The process occurs three times, and each time for ten minutes. The wash solution comprises of 0.1 percent Tween 20.

Once the final wash exits the reaction chamber the introduction of the antibody in 180 milliliters of binding buffer enters the reaction chamber containing a goat-anti-Rabbit antibody. Incubation continues for 2 hours at room temperature. The antibody solution exits the reaction chamber to a reagent reclamation system.

Wash solution of 500 milliliters enters the reaction chamber for ten minutes with a wash solution comprising 0.1 percent Tween 20 in phosphate-buffered saline ( 20 millimolar (mM) potassium-sodium phosphate at pH 7.5 with 9 percent weight per volume (w/v) sodium chloride). Each wash cycle will last for ten minutes. The final wash exits the reaction chamber to a reagent reclamation system.

The introduction of the signal development and quantitation reagent Horseradish peroxidase-linked probe (HRP) enters the reaction chamber for five minutes and is then egressed into a reagent reclamation system. The substrate solution contains 100 milliliters of PBS, pH 7.2, 0.03 percent Hydrogen Peroxide, 50 milligrams 3,3'-diaminobenzidine.

Final rinse of distilled water enters the reaction chamber three times for two minutes each time. Bands appear on the three membranes during the final assay indicating specificity of the 17 KD protein. The intensity of the band can be measured against a known standard value that 17 KD protein can be quantified.

In accordance with the subject invention, a simple and reproducible technique is presented whereby ligands and their receptors may be processed using verifiable programs thus rendering such processes as a qualitative and quantitative method.

In so much as the foregoing invention has been disclosed in some detail by way of illustration and example for purposes of accurate understanding , it will be certain that many changes or adaption of the protocols can be accommodated to the scope of the appended claims.

## Claims

1. A progressive method for conducting assay type developmental processes of a variety of matrices comprising of a variety of membranes, gels comprising of a variety of mixtures or biological tissues from various sources whereby micro or macro volumetric delivery and recovery of a variety of reagents may be ascertained by:

   (a) providing a reaction chamber to conduct and facilitate the ingress and egress of a reagent chemical that react by nature to selectively develop singular or multiple sample membranes, gels or biological tissues bound thereto a variety of protein or DNA molecules;

   (b) passing said reagent chemical through said reaction chamber in various controllable volumes and reclaiming said reagent chemicals for reuse purpose for certified safety disposal.

   (c) micro delivery and recovery of precious reagents via-nonabsorbing tubing, valve and controlling system.

2. The method of claim 1, wherein said reaction chamber containing a membrane or gel or biological tissue will consist of multiple ports facilitating a descrete and high purity level of said reagent chemicals promoting the high clarity of final ligand display.

3. The method of claim 2, wherein said descreteness will be maintained using detachable individual pouches retaining said reagent chemical thus allowing alternate storage site of said reagent chemical.

4. The method of claim 3, wherein said detachability shall also apply to said reaction chamber thus allowing alternate storage or incubations in temperature beyond but not limiting the scope of the invention.

5. The method of claim 4, wherein said reaction chamber may suit incubations shall not be limited to room temperature incubations but rather accomodate an integrated circuit built in the said reaction chamber to accelerate incubations within said reaction chamber.

6. The method of claim 5, wherein said integrated circuitry exists a digital computer program may operate its function and controllable features, creating a monitored environment therein.

7. The method of claim 6, wherein said digital computer program exists an avenue to control pinch valves to direct the flow of reclaimed reagents into a waste collector so as to cost effectively recover precious and costly reagents for further process analysis or regenerative use.

8. The method of claim 7, wherein said waste collector shall be a part of a reagent reclamation system so as to be claimed as an integrated module or seperate independent system.

FIG. 1

EP 0 463 648 A2

FIG. 2

EP 0 463 648 A2

FIG. 3

FIG. 4

FIG. 5

EP 0 463 648 A2

FIG. 6

FIG. 7